# EUROPEAN PATENT APPLICATION

(11) **EP 2 019 329 A1**
(43) Date of publication of application: **28.01.2009**
(21) Application number: 07702078.2
(22) Date of filing: 15.01.2007
(51) Int. Cl.: G02B 27/22, H04N 13/00

(54) **INTEGRATIVE SPECTACLE-SHAPED STEREO-VIDEO MULTIMEDIA DEVICE**

(30) Priority: 24.04.2006 CN 200620058094 U
(71) Applicant: Hu, Chao, Guangzhou Guangdong 510095 (CN)
(72) Inventor: Hu, Chao, Guangzhou Guangdong 510095 (CN)
(74) Representative: Stuttard, Garry Philip
(86) International application number: PCT/CN2007/000146
(87) International publication number: WO 2007/121640

(57) **Abstract**

An integrative spectacle-shaped stereo-video multimedia device includes a blinder (1) and arms (2) disposed on both sides of the blinder (1). Two sets of oculars (3) are disposed on an inner side of the blinder (1), and a distance between the two sets of the oculars (3) is adapted to a distance between two eyes. A micro-display (4) corresponding to each set of the oculars (3) is disposed in the blinder (1). Two digital camera modules (5) are disposed on an outer side of the blinder (1), and a distance between the two digital camera modules (5) is adapted to the distance between the two eyes. A controller (6), a memory (7), and a battery power (8) are disposed in the blinder (1). A control button (9), a signal input interface (10), and a signal output interface (11) are disposed on the blinder (1). The two micro-displays (4) and the two digital camera modules (5) are respectively connected to a controller (6) circuit. The memory (7), the battery power (8), the control button (9), the signal input interface (10), and the signal output interface (11) are respectively connected to the controller (6) circuit.

## Description

### BACKGROUND OF THE INVENTION

### Field of Invention

The present invention relates to a multi-functional personal electronic device, and more particularly to an integrative spectacle-shaped stereo-video multimedia device for personal use.

### Related Art

When viewing an object, two eyes of a human have a stereoscopic sense, because a distance between two pupils of the human eyes is approximately 6-7 cm. When the two eyes view an object, the viewing angles of the two eyes are not completely the same. Although the difference between the two eyes is slight, when it is transmitted to the brain through retinas, the brain has a sense of different distances based on the slight difference, thereby generating the stereoscopic sense. One eye can also see the object, but it is difficult to differentiate the farness and nearness and the distance of the object. According to this principle, for the same image, if two pictures with a slight angle difference are produced or shot by using the viewing angle difference of the two eyes, and then the two human eyes are made to respectively view the two pictures, the brain generates a stereo image through the retinas. Currently, the principle is applied to various stereo image demonstration techniques. However, the conventional stereo image viewing devices have some disadvantages, for example, the technique is complicated, the cost is high, the image viewing effect is not ideal, so it is difficult to popularize and use the stereo image viewing device as a personal product.

As the electronic technology is developed, a multi-functional electronic product with communication, shooting, recording, displaying, and gaming functions is proposed, which is a revolution to the conventional electronic products. However, most of the electronic video products can display only the plane images, and few personal electronic devices through which the eyes may view high-quality stereo images are available.

### SUMMARY OF THE INVENTION

The present invention is directed to an integrative spectacle-shaped stereo-video multimedia device, which has a simple structure, a low cost, and a vivid stereo effect, is convenient to use, is suitable for individual use, can record, store, play back, and download image and text signals, and can be used to play, view, and operate electronic games.

The present invention provides an integrative spectacle-shaped stereo-video multimedia device, which includes a blinder and arms disposed on both sides of the blinder. Two sets of oculars are disposed on an inner side of the blinder, and a distance between the two sets of the oculars is adapted to a distance between two eyes. A micro-display corresponding to each set of the oculars is disposed in the blinder. Two digital camera modules are disposed on an outer side of the blinder, and a distance between the two digital camera modules is adapted to the distance between the two eyes. A controller, a memory, and a battery power are disposed in the blinder. A control button, a signal input interface, and a signal output interface are disposed on the blinder. The two micro-displays and the two digital camera modules are respectively connected to a controller circuit. The memory, the battery power, the control button, the signal input interface, and the signal output interface are respectively connected to the controller circuit.

In the integrative spectacle-shaped stereo-video multimedia device, an external power socket, a memory card socket, and two sound pickups are further disposed on the blinder, the power socket is connected to a battery power circuit, and the memory card socket and the sound pickups are connected to the controller circuit.

In the integrative spectacle-shaped stereo-video multimedia device, an earphone connected to the controller circuit is disposed on the arms.

In the integrative spectacle-shaped stereo-video multimedia device, the oculars are lens sets.

In the present invention, as the above structure is adopted, the images displayed in the two displays may be viewed through the two naked eyes at the same time. Thus, by respectively playing synchronous images with the viewing angle difference adapted to the human eyes in the two displays, virtual images viewed by the two eyes through the oculars are sent to the brain to generate a stereo image with the far and near levels. In the present invention, complicated image processing techniques or expensive display panels are not required, the structure is simple, the cost is low, and the viewed display image has a vivid stereo effect. As the means for achieving the stereo effect is simple and quick, it is possible to shoot and view video contents at the same time, to download and play external image signals, and to play the stereo electronic games with a deep sense of involvement in the games, thereby providing a new multi-functional personal electronic device for consumers.

### BRIEF DESCRIPTION OF THE DRAWINGS

The present invention will become more fully understood from the detailed description given herein below for illustration only, and thus are not limitative of the present invention, and wherein:

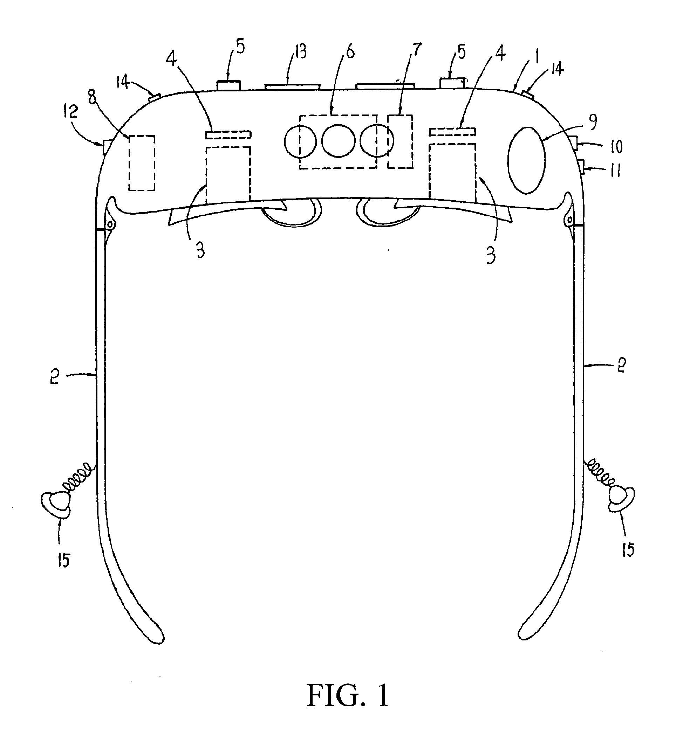

FIG. 1 is a schematic structural view of the present invention.

### DETAILED DESCRIPTION OF THE INVENTION

Referring to FIG. 1, an integrative spectacle-shaped stereo-video multimedia device of the present invention includes a blinder 1 and arms 2 disposed on both sides of the blinder 1. Two sets of oculars 3 are disposed on an inner side of the blinder 1, and the ocular 3 use lens sets having a magnifying function and capable of zooming out an imaging distance of a virtual image. A distance between the two sets of the oculars 3 is adapted to a distance between two eyes. A micro-display 4 corresponding to each set of the oculars 3 is respectively disposed in the blinder 1. The two eyes respectively view the synchronous images with the viewing angle difference adapted to the eyes respectively displayed by the two micro-displays 4 through the two sets of oculars 3, so as to form a stereo image of a scene. Two digital camera modules 5 are disposed on an outer side of the blinder 1, and a distance between the two digital camera modules 5 is adapted to the distance between the two eyes. In this manner, the two digital camera modules 5 may be used to shoot the scene identical with the scene viewed by the eyes. A controller 6, a memory 7, and a battery power 8 are disposed in the blinder 1, and a control button 9 used for controlling signal playing, stereo image shooting, and other functions is disposed on the blinder 1. A signal input interface 10, a signal output interface 11, a power socket 12, a memory card socket 13, and two sound pickups 14 are disposed on the blinder 1. The signal input interface 10 and the signal output interface 11 may use various video and audio analog or digital input and output interfaces of the prior art, for example, VGB, coaxial, and optical fiber input and output interfaces, for conveniently playing external signals or outputting shot signals. The power socket 12 is connected to a battery power 8 circuit, so as to conveniently charge the battery or use an external power, thereby increasing using time. The two micro-displays 4 and the two digital camera modules 5 are respectively connected to a controller 6 circuit. The memory 7, the battery power 8, the control button 9, the signal input interface 10, the signal output interface 11, the memory card socket 13, and the sound pickups 14 are respectively connected to the controller 6 circuit. An earphone 15 connected to the controller 6 circuit is disposed on the arms 2, such that a user may hear the synchronous sound while viewing the image frame.

In actual applications, the present invention may be not only used as a stereo image player, a stereo image shooting and storing device, a stereo image shooting monitor, but also as a stereo game console, an Internet stereo image display, a music player, and a sound recorder and the like. Thus, the present invention provides a new portable personal entertainment and business electronic device for consumers.

## Claims

1. An integrative spectacle-shaped stereo-video multimedia device, comprising a blinder (1) and arms (2) disposed on both sides of the blinder (1), wherein two sets of oculars (3) are disposed on an inner side of the blinder (1), and a distance between the two sets of oculars (3) is adapted to a distance between two eyes; a micro-display (4) corresponding to each set of oculars (3) is disposed in the blinder (1); two digital camera modules (5) are disposed on an outer side of the blinder (1), and a distance between the two digital camera modules (5) is adapted to the distance between the two eyes; a controller (6), a memory (7), and a battery power (8) are disposed in the blinder (1), and a control button (9), a signal input interface (10), and a signal output interface (11) are disposed on the blinder (1); the two micro-displays (4) and the two digital camera modules (5) are respectively connected to a controller (6) circuit; the memory (7), the battery power (8), the control button (9), the signal input interface (10), and the signal output interface (11) are respectively connected to the controller (6) circuit.

2. The integrative spectacle-shaped stereo-video multimedia device according to claim 1, wherein an external power socket (12), a memory card socket (13), and two sound pickups (14) are further disposed on the blinder (1), the power socket (12) is connected to a battery power (8) circuit, and the memory card socket (13) and the sound pickups (14) are connected to the controller (6) circuit.

3. The integrative spectacle-shaped stereo-video multimedia device according to claim 1 or 2, wherein an earphone (15) connected to the controller (6) circuit is disposed on the arms (2).

4. The integrative spectacle-shaped stereo-video multimedia device according to claim 1 or 2, wherein the oculars (3) are lens sets.

5. The integrative spectacle-shaped stereo-video multimedia device according to claim 3, wherein the oculars (3) are lens sets.
